# DEMANDE DE BREVET EUROPEEN

(11) **EP 4 528 040 A1**
(43) Date de publication de la demande: **26.03.2025**
(21) Numéro de dépôt: 24190787.2
(22) Date de dépôt: 25.07.2024
(51) Int. Cl.: E03F 1/00, F16L 3/13, F16L 3/26, E03F 3/02, F16B 7/18, F16B 37/08, F16L 3/127

(54) **DISPOSITIF DE FIXATION D'UN TUYAU D'EVACUATION EN VIDE SANITAIRE A UNE TIGE, PAR EXEMPLE UNE TIGE FILETEE**

(30) Priorité: 21.09.2023 FR 2310022; 15.01.2024 FR 2400376
(71) Demandeur: François Inglese, 43000 Le Puy (FR)
(72) Inventeur: INGLESE, François, 43000 LE PUY-EN-VELAY (FR)
(74) Mandataire: Cabinet Laurent & Charras

(57) **Abrégé**

L'invention concerne un dispositif (1) de fixation d'un tuyau d'évacuation en vide sanitaire à une tige filetée ancrée sous une dalle ou un faux plafond, le dispositif (1) étant formé d'une seule pièce monobloc comprenant des moyens d'encliquetage (2) du tuyau d'évacuation comprenant deux branches (2a) élastiques définissant une forme en C ; et au moins deux premières parties en forme de C (3), situées sur une face externe d'au moins une branche, les deux premières parties en forme de C (3) étant coaxiales et espacées l'une de l'autre d'une distance correspondant au moins au diamètre de la tige, chaque première partie en forme de C (3) présentant un diamètre et une ouverture adaptés pour le passage de la tige, les ouvertures des deux premières parties en forme de C (3) étant opposées l'une de l'autre afin de permettre un verrouillage des premières parties en forme de C (3) sur la tige par un mouvement d'un quart de tour après engagement de la tige dans l'espace entre les deux premières parties, l'axe des moyens d'encliquetage (2) en forme de C étant orthogonal à l'axe des premières parties en forme de C (3).

## Description

### Domaine technique

L'invention concerne le domaine de la fourniture de matériel pour les plombiers, maçons ou autres artisans, nécessitant de fixer un tuyau d'évacuation en vide sanitaire.

Plus largement, l'invention trouve une application avantageuse lorsqu'il s'agit de fixer un tuyau d'évacuation en vide sanitaire à une tige filetée sous une dalle ou un faux plafond.

### Art antérieur

Dans le domaine du bâtiment, il est courant de vouloir fixer des tuyaux en vide sanitaire pour le bon écoulement des eaux usées. Ces tuyaux sont le plus souvent fixés sous un faux plafond ou une dalle.

Les tuyaux en vide sanitaire nécessitent d'être disposés selon une pente particulière pour l'écoulement des déchets ou eaux usées. Plusieurs méthodes de fixation existent afin de réaliser cette pente.

Il est connu d'avoir par exemple recours à des tiges métalliques ou des suspentes associées à des colliers de suspension ou de fixation, par exemple du type collier de serrage, collier poire ou clip de fixation.

Ces suspentes, ou tiges métalliques, doivent être découpées à une longueur déterminée et précise, afin d'aboutir à la réalisation d'une pente convenable. Elles sont ensuite fixées sous la dalle selon un ordre croissant en taille. Enfin, un collier de suspension ou de serrage est fixée à l'extrémité inférieures de ces suspentes ou tiges, pour accueillir le tuyau en vide sanitaire.

Ce type de solution présente l'inconvénient d'être complexe à réaliser. En effet, on compte plusieurs étapes de réalisation parmi lesquelles le découpage des tiges à une longueur donnée, le meulage des tiges pour faire prendre le filet, l'étape de fixation qui doit être réalisée selon un ordre précis et l'étape de solidarisation de la tige avec le collier de suspension.

Les documents US5351920 et US6631876 décrivent des dispositifs de fixation de tuyaux, mais ne sont pas adaptés à l'application spécifique de la fixation d'un tuyau d'évacuation en vide sanitaire.

### Exposé de l'invention

L'un des buts de l'invention est donc de remédier aux problèmes de l'art antérieur en fournissant un dispositif de fixation d'un tuyau en vide sanitaire qui soit de conception simple, modulable, tout en évitant une multiplication d'étapes de réalisation qui augmenteraient les coûts d'installation.

Un autre objectif est de fournir un dispositif de fixation d'un tuyau sanitaire qui soit adaptable et réglable de manière précise, sans compromettre la structure de fixation dans son ensemble.

Un autre objectif est de pouvoir s'assurer de la stabilité d'un dispositif de fixation d'un tuyau sanitaire, en évitant les risques d'usure ou de fracture du tuyau.

A cet effet, il a été mis au point un dispositif de fixation d'un tuyau d'évacuation en vide sanitaire à une tige filetée ancrée sous une dalle ou un faux plafond, le dispositif étant formé d'une seule pièce monobloc, ce qui lui confère une grande simplicité de conception et de montage.

Pour assurer un maintien solide du tuyau à la tige, le dispositif de fixation comprend des moyens d'encliquetage du tuyau d'évacuation comprenant deux branches élastiques définissant une forme en C. Par « forme en C » on entend tout forme ouverte permettant de venir enserrer la circonférence du tuyau. On pourrait tout à fait imaginer une forme en U ou polygonale sans sortir du cadre de l'invention.

Le dispositif de fixation comprend au moins deux premières parties en forme de C, situées sur une face externe d'au moins une branche, les deux premières parties en forme de C étant coaxiales et espacées l'une de l'autre d'une distance correspondant au moins au diamètre de la tige, chaque première partie en forme de C présentant un diamètre et une ouverture adaptés pour le passage de la tige, les ouvertures des deux premières parties en forme de C étant opposées l'une de l'autre afin de permettre un verrouillage des premières parties en forme de C sur la tige par un mouvement d'un quart de tour après engagement de la tige dans l'espace entre les deux premières parties en forme de C, et l'axe des moyens d'encliquetage en forme de C étant orthogonal à l'axe des premières parties en forme de C.

Les moyens d'encliquetage, ainsi que les premières parties en forme en C permettent l'installation d'un tuyau d'évacuation de manière rapide, sûre, simple et efficace. En effet, les formes en C permettent au dispositif d'être fixé à une tige métallique préinstallée, rapidement, sans que la tige ne soit découpée à une taille particulière. Le réglage en hauteur du dispositif de fixation, notamment pour assurer la pente préconisée, est réalisé par vissage/dévissage du dispositif le long de la tige.

Pour améliorer la stabilité, il peut être envisagé de disposer les tiges filetées en quinconce le long du tuyau d'évacuation.

La forme en C des moyens d'encliquetage, grâce aux deux branches élastiques, permettent la réception du tuyau d'évacuation et de s'adapter aux différentes tailles de tuyaux sans difficulté.

Dans une variante avantageuse, le dispositif comprend des deuxièmes parties en forme de C, similaires aux premières parties en forme de C, situées sur l'autre branche des moyens d'encliquetage, lesquelles présentent par exemple un diamètre différent de celui des premières parties en forme de C, afin de s'adapter à différentes tailles de tiges.

Préférentiellement, au moins l'une des branches, et de préférence les deux branches présentent une extrémité recourbée vers l'intérieur pour venir en contact avec le tuyau afin de maintenir fermement le tuyau encliqueté, et de s'adapter aux différentes tailles de tuyaux.

Dans un mode de réalisation préféré, la ou les extrémités recourbées des branches présentent un chant transversal bombé. Ce chant bombé permet de maintenir un seul point de contact avec le tuyau d'évacuation, et rattraper les éventuels défauts d'alignement des dispositifs le long du tuyau.

Avantageusement, la ou les branches comprennent une nervure externe ménagée dans l'espace défini entre les premières parties en forme de C et/ou deuxièmes parties en forme de C, afin d'exercer une force d'appui sur la tige métallique pour faciliter les opérations de vissage/dévissage du dispositif sur la tige filetée.

Par exemple, la nervure externe est transversale pour s'engager dans un filet de la tige lorsque celle-ci est filetée, ou bien longitudinale pour exercer une pression sur ledit filet afin de faciliter le réglage de la position du dispositif le long de la tige par vissage/dévissage du dispositif.

Afin d'optimiser les opération de vissage/dévissage, la nervure externe est longitudinale et présente une section triangulaire.

D'une manière avantageuse, les premières parties en forme de C et/ou les deuxième parties en forme de C comprennent des nervures internes longitudinales ménagées sur une face interne destinées exercer une pression sur la tige, afin de la solidariser de manière plus sûre.

De préférence, les branches élastiques présentent une surface interne bombée pour rattraper les éventuels défauts d'alignement des dispositifs le long du tuyau.

Le dispositif selon l'invention permet également de positionner le tuyau d'évacuation au plus près de la dalle ou du faux plafond, en fixant le dispositif à la tige de telle manière que les moyens d'encliquetage soit ouvert vers le bas. Ce mode de réalisation permet en outre la fixation d'un tuyau d'évacuation en vide sanitaire dans un espace réduit.

Grâce à sa conception monobloc, ses capacités de verrouillage sécurisé et son adaptabilité à différentes configurations de tuyaux et de tiges, le dispositif de fixation selon l'invention représente une solution pratique et efficace pour la fixation de tuyaux en évacuation sanitaire.

### Brève description des dessins

La [Fig.1] est une vue de face d'un mode de réalisation du dispositif selon l'invention.
La [Fig.2] est une vue en perspective du dispositif.
La [Fig.3] est une vue de dessus du dispositif.
La [Fig.4] est une vue de face d'un deuxième mode de réalisation du dispositif selon l'invention.
La [Fig.5] est une vue de côté du deuxième mode de réalisation du dispositif.
La [Fig.6] est une vue en coupe transversale selon l'axe A-A de la figure 4.

### Description détaillée de l'invention

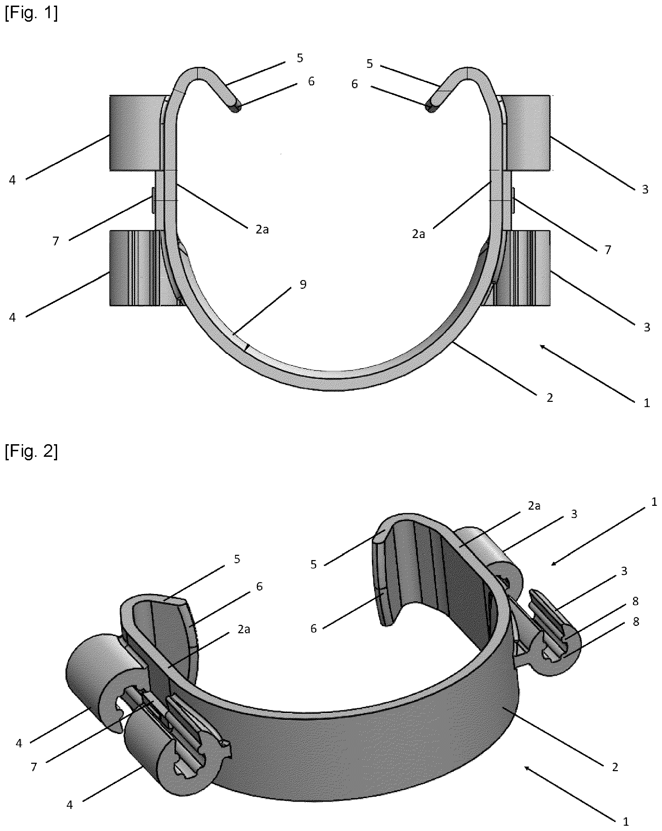

En référence aux figures 1 à 6, l'invention concerne un dispositif (1) de fixation d'un tuyau d'évacuation en vide sanitaire à une tige filetée ancrée sous une dalle ou un faux plafond.

Il est formé d'une seule pièce monobloc, comprenant des moyens d'encliquetage (2) du tuyau d'évacuation comprenant deux branches (2a) élastiques définissant une forme en C. Les branches élastiques sont configurées pour recevoir en encliquetage un tuyau de diamètre 100 mm, sans que cela ne soit limitatif, ce qui correspond aux tuyaux communément utilisés pour l'évacuation en vide sanitaire.

Le dispositif (1) comprend également deux premières parties en forme de C (3), situées sur une face externe des branches (2a), les deux premières parties en forme de C (3) étant coaxiales et espacées l'une de l'autre d'une distance correspondant au moins au diamètre de la tige, par exemple de préférence entre 20 et 30 mm.

Chaque première partie en forme de C (3) présente un diamètre et une ouverture adaptés pour le passage de la tige, les ouvertures des deux premières parties en forme de C (3) étant opposées l'une de l'autre afin de permettre un verrouillage des premières parties en forme de C (3) sur la tige par un mouvement d'un quart de tour après engagement de la tige dans l'espace entre les deux premières parties en forme de C (3), l'axe des moyens d'encliquetage (2) en forme de C étant orthogonal à l'axe des premières parties en forme de C.

De cette manière, l'invention permet, en encliquetant plusieurs dispositif sur des tiges filetée, de venir fixer un tuyau en vide sanitaire lui-même encliqueté entre les deux branches élastiques (2a) de chaque dispositif. Le réglage en hauteur du dispositif de fixation, notamment pour assurer la pente préconisée, est réalisé par vissage/dévissage du dispositif le long de la tige. La manipulation est simple et efficace. En pratique, les dispositifs sont fixés aux tiges filetées en positionnant les branches élastiques (2a) vers le haut pour soutenir de manière optimale le tuyau. Cependant, il n'est pas exclu qu'un premier dispositif soit positionné avec les branches élastiques (2a) orientées vers le bas pour pouvoir positionner le tuyau au plus près du faux plafond si l'espace est restreint. Pour assurer une stabilité optimale, il peut être envisagé de disposer les tiges filetées en quinconce le long du tuyau d'évacuation.

En référence à la figure 1, les deuxièmes parties en forme de C (4) sont similaires aux premières parties en forme de C (3), et sont situées sur l'autre branche (2a) des moyens d'encliquetage (2).

En référence à la figure 2, les deuxièmes parties en forme de C (4) présentent un diamètre différent de celui des premières parties en forme de C (3), afin de s'adapter à différents diamètres de tiges utilisés par les artisans, par exemple M6, M7, M8 ou M10. On peut par exemple prévoir d'un côté M8 et de l'autre M6/M7.

En référence aux figures 1 et 2, les deux branches (2a) présentent une extrémité recourbée (5) vers l'intérieur pour venir en contact avec le tuyau afin de maintenir fermement le tuyau encliqueté, et de s'adapter éventuellement aux différentes tailles de tuyaux.

Chaque extrémité recourbée (5) des branches (2a), et notamment le chant transversal libre, présentent un profil bombé (6). Ce profil bombé permet de prendre appui sur le tuyau en un point de contact et permet ainsi de tolérer un défaut d'alignement des dispositifs le long du tuyau.

Chaque branche (2a) des moyens d'encliquetage (2) comprend une nervure externe (7) ménagée dans l'espace défini entre les premières parties en forme de C (3) et/ou deuxièmes parties en forme de C (4), afin de sécuriser davantage la fixation avec la tige filetée, en exerçant une force d'appui sur la tige maintenue dans les premières parties en forme en C (3) et les deuxièmes parties en forme en C (4).

La nervure (7) située sur chaque branche (2a) est par exemple longitudinale pour exercer une pression sur ledit filet afin de permettre le réglage de la position du dispositif (1) le long de la tige par vissage/dévissage du dispositif (1).

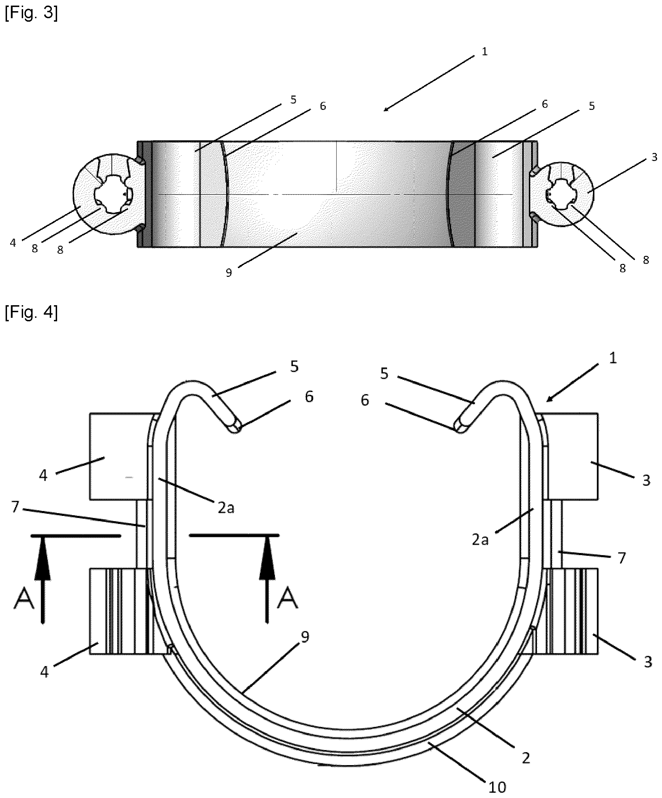

Selon la forme de réalisation illustrée aux figures 4 à 6, la nervure (7) présente une section triangulaire de sorte que la pointe du triangle vienne en appui linéaire contre la tige lors engagée dans les formes en C. Cela permet d'optimiser les efforts et le filet de la tige vient creuser et tarauder la pointe de la nervure.

Les premières parties en forme en C (3) et les deuxièmes parties en forme de C (4) comprennent des nervures internes (8) longitudinales ménagées sur une face interne destinées exercer une pression sur la tige afin d'assurer l'immobilisation du dispositif (1) et donc sa stabilité.

En référence aux figures 1 et 3, la face interne (9) des branches élastiques (2a) et notamment leur portion en contact avec le tuyau, est bombée afin de prendre appui sur le tube en une seule ligne de contact pour tolérer des défauts d'alignement des dispositifs le long du tuyau.

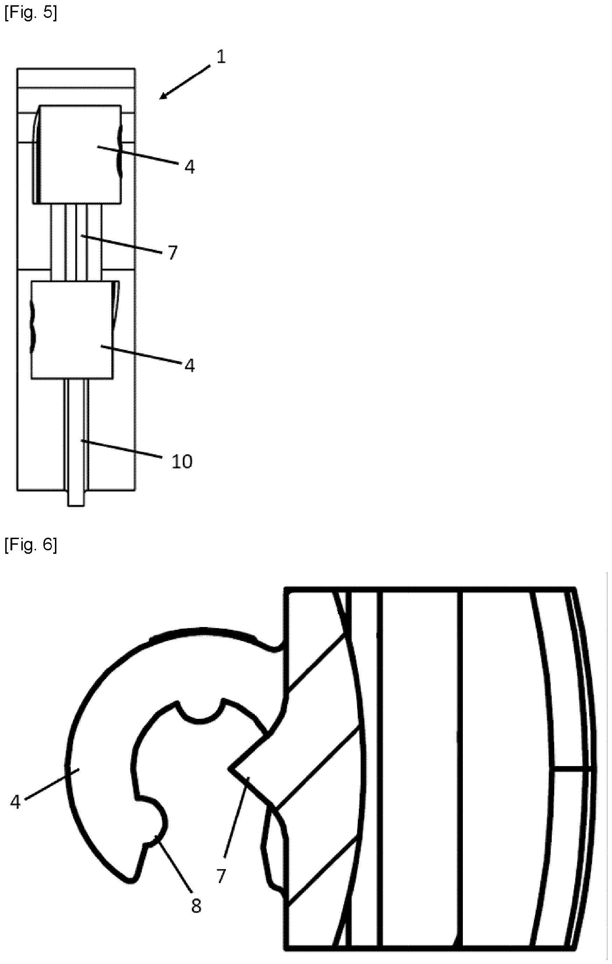

De préférence, et comme illustré aux figures 4 et 5, les moyens d'encliquetage (2) en forme de C du tuyau d'évacuation comprennent une nervure (10) qui coure le long de ladite forme en C pour apporter plus de rigidité.

En conclusion, le dispositif (1) de fixation d'un tuyau d'évacuation en vide sanitaire selon l'invention offre une solution pratique et efficace pour la fixation de tuyaux d'évacuation. Sa conception monobloc, son mécanisme de verrouillage sécurisé et son adaptabilité à différentes configurations de tuyaux et de tiges en font un dispositif (1) facile à utiliser pour les professionnels du bâtiment et de l'industrie.

## Revendications

1. Dispositif (1) de fixation d'un tuyau d'évacuation en vide sanitaire à une tige filetée ancrée sous une dalle ou un faux plafond, le dispositif (1) étant formé d'une seule pièce monobloc comprenant :
- des moyens d'encliquetage (2) du tuyau d'évacuation comprenant deux branches (2a) élastiques définissant une forme en C ;
- au moins deux premières parties en forme de C (3), situées sur une face externe d'au moins une branche, les deux premières parties en forme de C (3) étant coaxiales et espacées l'une de l'autre d'une distance correspondant au moins au diamètre de la tige, chaque première partie en forme de C (3) présentant un diamètre et une ouverture adaptés pour le passage de la tige, les ouvertures des deux premières parties en forme de C (3) étant opposées l'une de l'autre afin de permettre un verrouillage des premières parties en forme de C (3) sur la tige par un mouvement d'un quart de tour après engagement de la tige dans l'espace entre les deux premières parties en forme de C (3), l'axe des moyens d'encliquetage (2) en forme de C étant orthogonal à l'axe des premières parties en forme de C (3).

2. Dispositif (1) selon la revendication 1, **caractérisé en ce qu'**il comprend des deuxièmes parties en forme de C (4), similaires aux premières parties en forme de C (3), situées sur l'autre branche (2a) des moyens d'encliquetage (2).

3. Dispositif (1) selon la revendication 2, **caractérisé en ce que** les deuxièmes parties en forme de C (4) présentent un diamètre différent de celui des premières parties en forme de C (3).

4. Dispositif (1) selon la revendication 1, **caractérisé en ce qu'**au moins l'une des branches (2a), et de préférence les deux branches (2a) présentent une extrémité recourbée (5) vers l'intérieur pour venir en contact avec le tuyau.

5. Dispositif (1) selon la revendication 4, **caractérisé en ce que** la ou les extrémités recourbées (5) des branches (2a) présentent un chant transversal bombé (6).

6. Dispositif (1) selon la revendication 2, **caractérisé en ce que** la ou les branches (2a) comprennent une nervure externe (7) ménagée dans l'espace défini entre les premières parties en forme de C (3) et/ou deuxièmes parties en forme de C (4).

7. Dispositif (1) selon la revendication 6, **caractérisé en ce que** la nervure externe (7) est transversale pour s'engager dans un filet de la tige lorsque celle-ci est filetée, ou bien longitudinale pour exercer une pression sur ledit filet afin de permettre le réglage de la position du dispositif (1) le long de la tige par vissage/dévissage du dispositif (1).

8. Dispositif (1) selon la revendication 2, **caractérisé en ce que** les premières parties en forme de C (3) et/ou les deuxième parties en forme de C (4) comprennent des nervures internes (8) longitudinales ménagées sur une face interne destinées exercer une pression sur la tige.

9. Dispositif (1) selon la revendication 7, **caractérisé en ce que** la nervure externe (7) est longitudinale et présente une section triangulaire.

10. Dispositif (1) selon la revendication 1, **caractérisé en ce que** les branches élastiques (2a) présentent une surface interne (9) bombée.
